# EUROPEAN PATENT SPECIFICATION

(11) **EP 1 755 353 B1**
(45) Date of publication and mention of the grant of the patent: **21.01.2009**
(21) Application number: 05783964.9
(22) Date of filing: 05.09.2005
(51) Int. Cl.: H04W 4/12

(54) **METHOD FOR MULTICASTING SHORT MESSAGE**
MULTICASTINGVERFAHREN FÜR KURZNACHRICHTEN
PROCEDE DE MULTIDIFFUSION DE MESSAGES COURTS

(30) Priority: 16.09.2004 CN 200410078008
(43) Date of publication of application: 21.02.2007
(73) Proprietor: Huawei Technologies Co., Ltd., Longgang District, Shenzhen Guangdong 518129 (CN)
(72) Inventor: CHEN, De Huawei Administration Building, 518129 Shenzhen, Guangdong (CN); CHENG, Jinneng Huawei Administration Building, 518129 Shenzhen, Guangdong (CN)
(74) Representative: Beresford, Keith Denis Lewis
(86) International application number: PCT/CN2005/001407
(87) International publication number: WO 2006/029563

(56) References cited:
- WO-A-02/07457
- WO-A-98/25422
- WO-A-03/094552
- WO-A1-02/084895
- CN-A- 1 185 266
- CN-A- 1 352 494
- CN-A- 1 452 416
- GB-A- 2 327 571
- US-B1- 6 289 223

## Description

### Field of the Invention

The present invention is related to the technique for short message delivery in a wireless communication system, and more particularly to a method, a system and apparatuses for short message group-delivering in a wireless communication system.

### Background of the Invention

Along with the development of wireless communication technology, short message service has been applied gradually into the wireless communication system. Short message service transfers text information of short messages with No.7 signaling network as its bearing system. The contents of a short message are limited within 70 words, i.e. 140 bytes or so. A short message is mainly sent and received by mobile terminals peer to peer, or between a mobile terminal and a communication network.

A mobile network generally includes voice channels and control channels. Although it is a value added service provided by the wireless communication system like voice transmission and fax, short message service does not occupy the voice channel which ensures the speediness of delivery and greatly reduces the cost for communication.

A short message is delivered via a wireless control channel, stored and forwarded by a Short Message Service Center (SMSC) in the network of the communication system, and the contents of each message are limited within 140 bytes. The plain text information from the sender is stored in the SMSC, and then forwarded to the destination user terminals, which means that even if the receiver can not receive information instantly due to mobile offline and many other reasons, the system may save and resend the information later at an appropriate time.

When a service subscriber wants to make short message group-delivering, it actually means that this service subscriber send a point to point short message to each destination user terminal one by one. The process is described as below: the source service subscriber edits a text short message first, and then picks up phone numbers of destination user terminals or by Men Machine Interface (MMI) such as from a telephone directory or directly inputting on a keyboard, and afterwards presses the "YES" or "ENTER" button to start delivering this short message. The short message is sent to the first destination user terminal according to the point-to-point short message sending process, if this first delivery is successful, the short message is sent to the next destination user terminal until the last destination user terminal has successfully received the message; if the short message delivery to a destination user terminal fails, a failure report is returned and the process of short message delivery terminates.

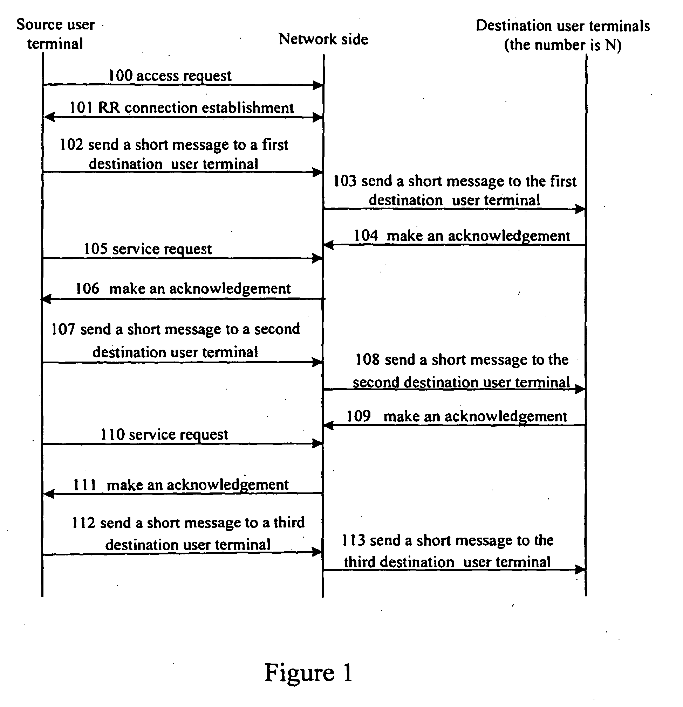

Figure 1 shows a specific process of short message group-delivering in the prior art. The short message sender is set to be a source user terminal and all short message receivers are set to be destination user terminals, and the number of destination user terminals is at least one, the detailed steps are as blow:
Step 100: the source user terminal sends an access request to the network using random access procedures.
Step 101: upon receiving the access request, the network initiates a Radio Resource (RR) connection establishment with the source user terminal, including an immediate assignment procedure and a service request procedure etc. The RR connection establishment may also include an authentication procedure and a ciphering procedure as well, and the service request indicates that the type of service is short message.
Steps 102-103: the source user terminal sends a short message to a first destination user terminal through the network;
   the process of the source user terminal sending the short message to the first destination user terminal through the network is that the source user terminal sends the short message to the SMSC in the network and the SMSC forwards the short message to the first destination user terminal later.
Step 104: upon receiving the short message, the first destination user terminal makes an acknowledgement to the SMSC that it has received the short message.
Step 105: after sending a short message to the first destination user terminal, the source user terminal sends a service request to the network indicating that the delivery of the short message needs to be continued, which means that the RR connection need not be released by the network.
Step 106: the network makes an acknowledgement to the source user terminal that the first destination user terminal has received the short message.
Step 107-108: the source user terminal then sends the short message to a second destination user terminal through the network.
Step 109: upon receiving the short message, the second destination user terminal makes an acknowledgement to the SMSC that it has received the short message.
Step 110: after sending the short message to the second destination user terminal, the source user terminal sends a service request to the network indicating that the delivery of the short message needs to be continued, which means that the RR connection need not be released by the network.
Step 111: the network makes an acknowledgement to the source user terminal that the second destination user terminal has received the short message.
Step 112-113: the source user terminal then sends the short message to a third destination user terminal through the network and then steps 107-111 are repeatedly performed until the sending of the short message to the last destination user terminal is completed.

As aforesaid, the technical solution for short message group-delivering is equivalent to a source user terminal sending the same short message to different destination user terminals one by one. Each time for sending the short message to different destination user terminals, it is necessary to send a service request to the network, and then send for N times the short message with the same contents. Therefore, the time for short message group-delivering is very long, and radio resources are wasted for sending a short message with the same contents each time.

US-B1- 6 289 223 and CN-A- 1 452 416 respectively puts forward a method for transmitting a short message from a source user terminal to multiple destination user terminals. The method is implemented as follows. A group identified by a group ID is stored in a network side, when a source user desires to send a short message to multiple destination user terminals, the source user sends the short message to the network, the short message including the group ID. The network obtains destination user terminal according to the group ID, and sends the short message to the destination user terminals.

However, the group, according to either US-B1- 6 289 223 or CN-A- 1 452 416, is stored in an SMSC. The SMSC in existing technology only focuses on peer to peer short message delivery. For storing a group, the software in the SMSC needed to be updated and the capability of the database in the SMSC should be extended.

At present, along with the development of wireless communication technology, a trunking radio communication system or, for short, a trunking system appears. As a rather economical and flexible commanding/dispatching communication system recently developed, the trunking system is widely used in government agencies, energy source and transportation units, airports and docks, industrial and mining enterprises, fire and police stations, water authority and military units to meet the demand of various units for intercommunication.

In the existing trunking system, each group includes information of group identification (group ID) and group call area defined as a cluster of cells. The information, however, is some fixed information stored in a Home Location Register (HLR) and a Subscriber Identity Module (SIM) card when a service subscriber opens an account, which do not enable mobile management of group call service subscribers.

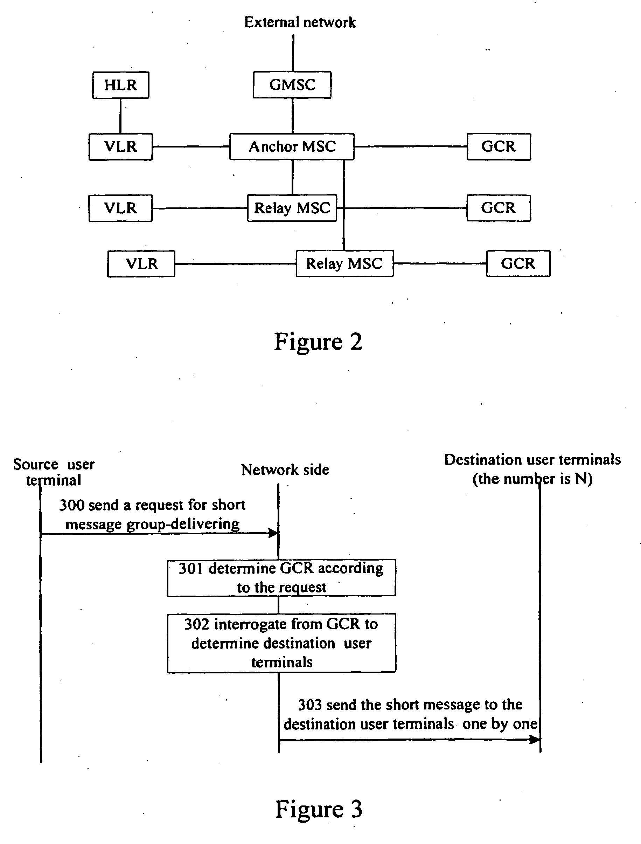

Figure 2 illustrates the core network structure of a trunking system. In Figure 2, an HLR stores information of a service subscriber, including International Mobile Subscriber Identify (IMSI) of the service subscriber and a list of group IDs the service subscriber is entitled to use; a Gateway Mobile Switching Center (GMSC) connected with the external network and also connected with an anchor Mobile Switching Center (MSC); the anchor MSC is responsible for managing and maintaining a Voice Group Call Service (VGCS); a relay MSC is the MSC controlling cells of a group call area which are not under control of the group call anchor MSC when the group call area exceeds one MSC area, the relation between the anchor MSC and the relay MSCs is one-to-multiple in tree shape; a Visitor Location Register (VLR) stores the IMSI of a service subscriber and a list of group IDs the service subscriber is entitled to use, which are copied from the HLR when the service subscriber roams; a Group Call Register (GCR) includes group ID and group call area which are combined as a group call reference, the GCR connected with the anchor MSC contains a list of identities of dispatchers, a list of relay MSC, and a list of cells controlled directly by the Anchor MSC related to the group call reference, and the GCR connected with relay MSC contains an anchor MSC address related to the group call reference, and a list of cells controlled by the relay MSC.

Upon receiving a group call initiating request, the anchor MSC interrogates the group attributes from the connected GCR to get the list of identities of dispatchers, the list of relay MSCs, and the list of cells under the control of the anchor MSC; then the anchor MSC calls the dispatcher, calls the relay MSCs and establishes group call channels in the cells under the control of all relay MSCs, notifies the service subscribers in the group about the initiated group call on the NCH of each cell and indicates the group channel for group members to listen on.

Upon receiving the group call request from the anchor MSC, the relay MSC interrogates the list of cells from the connected GCR, establishes group call channels in these cells, and notifies service subscribers in the group about the initiated group call on the NCH of each cell and indicates the group channels for group members to listen on.

It may be realized by the trunking system that a call may be initiated by a service subscriber and listened simultaneously by other service subscribers in a group; however, a service subscriber of the group in the trunking system can only have the group ID but can not have list of service subscribers in the group. Therefore it is impossible to realize the one-to-multiple short message delivery service, thus can not solve the problem of repeatedly sending a short message with the same contents to each destination user terminal.

### Summary of the Invention

The embodiments of the present invention provides a method, a system and apparatuses for short message group-delivering, by which there is no need to send short messages with same contents to different destination user terminals one by one, therefore the delivery time and radio resources may be saved.

A method for short message group-delivering includes: storing in a Group Call Register, on a network, a group ID and IDs of user terminals which are members of the trunking group identified by that group ID for each of a plurality of trunking groups;
receiving, by the network, a request for short message group-delivering which request includes the group ID and the contents of a short message (300);
determining, by the network, the group according to the group ID (301), obtaining the IDs of destination user terminals from the Group Call Register (302), and
sending, by a Short Message Service Center or a Short Message Service-Gateway Mobile Switching Center on the network, the contents of the short message to the destination user terminals(303).

Optionally, the request is sent from a source user terminal to the network (300);
the group is determined according to the area where the source user terminal is located and the group ID (301).

Optionally, the request is sent from a source user terminal to the network and includes a group call area (300); the group is determined according to the group call area and the group ID (301).

Optionally, the source user terminal may be one of a mobile User Equipment, Internet, Email and a communication system control center.

The sending the contents of the short message to the destination user terminals (303) includes:
sending, by the network, the IDs of the destination user terminals and the contents of the short message to a Short Message Service Center or Short Message Service Gateway Mobile Switching Center of the network;
sending, by the Short Message Service Center or Short Message Service-Gateway Mobile Switching Center, the contents of the short message to the destination user terminals with the IDs one by one.

Optionally, the IDs of the destination user terminals may be International Mobile Subscriber Identities.

Optionally, the method further includes:
after sending the contents of the short message to the destination user terminals (303), monitoring, by the network, whether the destination user terminals have received the short message,
setting, according to the result of monitoring, a state report on whether the destination user terminals have received the short message, and
returning the state report to a user terminal initiating the request for short message group-delivering.

A system for short message group-delivering includes:
a Group Call Regsiter, on a network, the Group Call Register is adapted to store a group ID and IDs of user terminals which are members of the trunking group identified by that group ID for each of a pluraltity of trunking groups;
a Short Message Service Center or a Short Message Service-Gateway Mobile Switching Center, SMS-GMSC, adapted to receive a request for short message group-delivering which request includes the group ID and the contents of a short message (300); to determine the trunking group according to the group ID (301); to acquire the IDs of destination user terminals from the Group Call Register (302), and to send the contents of the short message to the destination user terminals (303).

Optionally, the system further includes:
a source user terminal for sending the request for short message group-delivering to the network(300).

Optionally, the source user terminal includes one of a mobile User Equipment, Internet, Email and a communication system control center.

A Group Call Register, includes:
a unit for saving a list of service subscribers in each group attribute of the Group Call Register, responsible for recording the IDs of the service subscribers; and
a unit for adding the IDs of the service subscribers to the list of service subscribers when the service subscribers opening accounts;
a unit for modifying the IDs of the service subscribers in the list of service subscribers when the service subscribers modifying the opening information; and
a unit for deleting the IDs of the service subscribers when the service subscribers exiting from the group.

A mobile unit, includes:
a unit for saving a group of user terminals correspondingly with the identifies of the group of user terminals to a Group Call Register which the group belongs; and
a unit for sending a request for short message group-delivering including group ID of the group (300).

A Short Message Service Center, includes:
a unit for receiving a request for short message group-delivery which request includes a group ID and the contents of a short message (300),
a unit for determining a trunking group according to the group ID (301),
a unit for acquiring the IDs of destination user terminals from a Group Call Register (302); and
a unit for sending the contents of the short message to the destination user terminals with the IDs (303).

A Short Message Service-Gateway Mobile Switching Center, includes:
a unit for receiving a request for short message group-delivery which request includes a group ID and the contents of a short message (300),
a unit for determining a trunking group according to the group ID (301),
a unit for acquiring the IDs of destination user terminals from a Group Call Register (302); and
a unit for sending the contents of the short message to the destination user terminals with the IDs (303).

It can be seen from the above solution that the embodiments of the invention establishes a group that will receive short messages, identities the group with a group ID and stores the IDs of service subscribers to which the short message is delivered. When initiating short message group-delivering, the source user terminal sends a request to the network for short message group-delivering including the group ID and the contents of the short message; upon receiving the request, the network determines the group according to the group ID and determine the destination user terminals to which the short message is to be sent one by one by the IDs of service subscribers in the group ID. By the method, the system and the apparatuses, a source user terminal need not send point-to-point short messages with same contents to different destination user terminal one by one. It only needs the network to confirm different destination user terminals to which short message is to be sent one by one. Therefore, message delivery time and radio resources could be saved. Furthermore, this invention may establish a group that will receive and send short messages based on a trunking system, store the group as a trunking group in the GCR to which the group belongs so as not to increase the space of the network.

### Brief Description of the Drawings

Figure 1 is a flowchart illustrating a specific process for delivering short message to a group in the prior art.
Figure 2 is a block diagram illustrating the core network structure of a trunking system.
Figure 3 is a flowchart illustrating the process for delivering short message to a group in a trunking system according to an embodiment of the present invention.

### Detailed description of the invention

The present invention is hereinafter described in detail with reference to the embodiments and the accompanying drawings.

Group call area and group ID are combined as a group call reference. In the prior art, a GCR only records the basic group attributes, i.e. the group call reference, but does not record the number of the service subscribers and the IDs of all service subscribers in the group.

In order to realize the method for short message group-delivering in a trunking system, an embodiment of the invention adds a list of service subscribers to each group attribute of the GCR responsible for maintaining the list of service subscribers. When a service subscriber opens an account or modifies account opening information, the ID of the service subscriber is updated into the list of service subscribers related with the GCR. When a service subscriber opens an account, it is necessary to indicate the group and group call area to which the service subscriber belongs i.e., the group call reference; the network of the communication system will find the corresponding GCR according to the group call reference, add the ID of the service subscriber into the list of service subscribers of the corresponding trunking group in the GCR. When a service subscriber exits from a group for such reasons as changing position, demission, retiring, or the terminal being stolen, the GCR will delete the ID of the service subscriber from the list of service subscribers of the corresponding trunking group.

With the adding and deleting operations, the GCR can maintain the list of service subscribers of the trunking group.

In order to perform short message group-delivering, a service subscriber may in advance establish a trunking group including a source user terminal and destination user terminals, and take the IMSIs of the source user terminal and destination user terminals as a list of service subscribers, then save the IMSIs correspondingly with the source user terminal and destination user terminals to the GCR to which the trunking group belongs.

Figure 3 is a flowchart illustrating the method for short message group-delivering in a trunking system according to an embodiment of this invention, in this embodiment, the list of service subscribers is included in a GCR, and identified by a group ID, the method includes specific steps as below.

Step 300: a source user terminal sends to the network a request for short message group-delivering including a trunking group ID and the contents of the short message.

Step 301: upon receiving the request, the network determines the group call reference of the trunking group according to the cell the source user terminal is located and the trunking group ID included in the request, and determines the GCR to which the trunking group belongs according to the group call reference of the trunking group.

Step 302: the network interrogates the determined GCR, obtains the list of service subscribers corresponding to the trunking group, and obtains IDs of a plurality of destination user terminals to which the short message is to be sent.

Step 303: the network sends the short message to the obtained destination user terminals.

The network sends the IDs of the destination user terminals to the SMSC in the network, and the SMSC sends the contents of the short message from the source user terminal one by one to the destination user terminals associated with the IDs.

When, according to the prior art, detecting that the service subscriber in the trunking group fails to receive the short message, the network may return, by the SMSC in it, a state report to the source user terminal to indicate which user terminals fail in reception and which user terminals succeed in reception.

In the embodiment above, when the function of an SMSC is realized by an SMS Gateway MSC (SMS-GMSC), the SMSC may be replaced by the SMS-GMSC. The group reference and the list of service subscribers corresponding to the trunking group are saved in a GCR, and, alternatively, may be saved in other storage units such as an HLR or an SMS-GMSC in implementation, which is easy to understand.

In the embodiment above, the source user terminal is a mobile User Equipment. Optionally, short message group-delivering may be directly initiated by the network, and the network may initiate short message group-delivering from Internet web pages, Emails or communication system control centers which is similar to the process above. The difference is that when an initiation is made by the network, the group call reference instead of the group ID must be given clearly. Otherwise, the network can not determine which group call area the user terminal belongs to.

Alternatively, the embodiment may not be based on a trunking system, but in advance establish a group of short message group-delivering in the network, and identify the group by its group ID and stores the IMSIs of the service subscribers for receiving and sending short messages. When initiating a short message group-delivering to the network, the source user terminal sends a request for short message group-delivering including a group ID and the contents of the short message. Upon receiving the request, the network determines the group according to the group ID and determines destination user terminals to which the short message is to be sent one by one.

With the aforesaid technique, the service subscriber can conveniently realize short message delivery within a group to ensure that the short message is sent to all user terminals in the group and the source user terminal may get an acknowledgement of short message group-delivering. In addition, when initiating a short message group-delivering, it is unnecessary for a source user terminal to send a short message with the same contents to a network repeatedly.

The foregoing is only preferred embodiments of this invention and is not for use in limiting the protection scope thereof; any modification, equivalent replacement and improvement are covered in the protection scope thereof.

## Claims

1. A method for short message group-delivering, **characterized in**:
storing, in a Group Call Register, on a network, a group ID and IDs of user terminals which are members of the trunking group identified by that group ID for each of a plurality of trunking groups;
receiving, by the network, a request for short message group-delivering which request includes the group ID and the contents of a short message (300);
determining, by the network, the group according to the group ID(301), obtaining the IDs of destination user terminals from the Group Call Register (302), and
sending, by a Short Message Service Center or a Short Message Service-Gateway Mobile Switching Center on the network, the contents of the short message to the destination user terminals (303).

2. The method of Claim 1, wherein the request is sent from a source user terminal to the network (300);
the trunking group is determined according to the area where the source user terminal is located and the group ID (301)

3. The method of Claim 1, wherein the request is sent from a source user terminal to the network and includes a group call area (300);
the group is determined according to the group call area and the group ID(301).

4. The method of Claim 2 or Claim 3, wherein the source user terminal comprises one of a mobile User Equipment, Internet, Email and a communication system control center.

5. The method of Claim 1, wherein the sending the contents of the short message to the destination user terminals (303) comprises:
sending, by the network, the IDs of the destination user terminals and the contents of the short message to a Short Message Service Center or Short Message Service-Gateway Mobile Switching Center of the network;
sending, by the Short Message Service Center or Short Message Service-Gateway Mobile Switching Center, the contents of the short message to the destination user terminals with the IDs one by one.

6. The method of Claim 1 or Claim 5, wherein the IDs of the destination user terminals are International Mobile Subscriber Identities.

7. The method of claim 1, further comprising:
after sending the contents of the short message to the destination user terminals (303), monitoring, by the network, whether the destination user terminals have received the short message,
setting, according to the result of monitoring, a state report on whether the destination user terminals have received the short message, and
returning the state report to a user terminal initiating the request for short message group-delivering.

8. A system for short message group-delivering, **characterized in that** the system comprises:
a Group Call Register, on a network, the Group Call Register is adapted to store a group ID and IDs of user terminals which are members of the trunking group identified by that group ID for each of a plurality of trunking groups;
a Short Message Service Center or a Short Message Service-Gateway Mobile Switching Center, adapted to receive a request for short message group-delivering which request includes the group ID and the contents of a short message (300); to determine the trunking group according to the group ID (301); to acquire the IDs of destination user terminals from the Group Call Register (302), and to send the contents of the short message to the destination user terminals (303).

9. The system of claim 8, further comprising:
a source user terminal for sending the request for short message group-delivering to the network(300).

10. The system of claim 9, wherein the source user terminal comprise one of a mobile User Equipment, Internet, Email and a communication system control center.

11. A Group Call Register, **characterized in that** the Group Call Register comprises:
a unit for saving a list of user terminals in each group attribute of the Group Call Register, responsible for recording the IDs of the user terminals; and
a unit for adding the IDs of the user terminals to the list of user terminals when the user terminals opening accounts;
a unit for modifying the 1Ds of the user terminals in the list of user terminals when the user terminals modifying the opening information; and
a unit for deleting the IDs of the user terminals when the user terminals exiting from the group.

12. A mobile unit, **characterized in that** the mobile unit comprises:
a unit for saving a group of user terminals correspondingly with the identities of the group of user terminals to a Group Call Register to which the group belongs; and
a unit for sending a request for short message goup-delivering including group ID of the group (300).

13. A Short Message Service Center, **characterized in that** the Short Message Service Center comprises:
a unit for receiving a request for short message group-delivery which request includes a group ID and the contents of a short message (300),
a unit for determining a trunking group according to the group ID (301),
a unit for acquiring the IDs of destination user terminals from a Group Call Register (3 02); and
a unit for sending the contents of the short message to the destination user terminals with the IDs (303).

14. A Short Message Service-Gateway Mobile Switching Center, **characterized in that** the Short Message Service-Gateway Mobile Switching Center comprises:
a unit for receiving a request for short message group-delivery which request includes a group ID and the contents of a short message (300),
a unit for determining a trunking group according to the group ID (301),
a unit for acquiring the IDs of destination user terminals from a Group Call Register (302); and
a unit for sending the contents of the short message to the destination user terminals with the IDs (303).

## Patentansprüche

1. Verfahren zur Kurzmitteilungs-Gruppenbeförderung, **dadurch gekennzeichnet, daß**:
in einem Gruppenrufregister in einem Netzwerk eine Gruppen-ID und IDs von Benutzerendstellen gespeichert werden, die Mitglieder der Bündelungsgruppe sind, die durch die Gruppen-ID für jede von mehreren Bündelungsgruppen identifiziert ist;
durch das Netzwerk eine Anfrage zur Kurzmitteilungs-Gruppenbeförderung empfangen wird, die die Gruppen-ID und die Inhalte einer Kurzmitteilung (300) aufweist;
durch das Netzwerk die Gruppe gemäß der Gruppen-ID (301) bestimmt wird und die IDs der Ziel-Benutzerendstellen von dem Gruppenrufregister (302) erhalten werden, und
durch ein Short-Message-Service-Zentrum oder ein Short-Message-Service-Gateway-Mobile-Switching-Zentrum in dem Netzwerk die Inhalte der Kurzmitteilung zu den Ziel-Benutzerendstellen (303) gesendet werden.

2. Verfahren nach Anspruch 1, wobei
die Anfrage von einer Ursprungs-Benutzerendstelle zu dem Netzwerk (300) gesendet wird, und
die Bündelungsgruppe gemäß dem Bereich, in dem sich die Ursprungs-Benutzerendstelle befindet, sowie gemäß der Gruppen-ID (301) bestimmt wird.

3. Verfahren nach Anspruch 1, wobei
die Anfrage von einer Ursprungs-Benutzerschnittstelle zu dem Netzwerk gesendet wird und einen Gruppenrufbereich (300) aufweist, und
die Gruppe gemäß dem Gruppenrufbereich und der Gruppen-ID (301) bestimmt wird.

4. Verfahren nach Anspruch 2 oder 3, wobei die Ursprungs-Benutzerendstelle ein mobiles Benutzergerät, Internet, E-Mail oder ein Kommunikationssystems-Kontrollzentrum aufweist.

5. Verfahren nach Anspruch 1, wobei beim Senden der Inhalte der Kurzmitteilung zu den Ziel-Benutzerendstellen (303):
die IDs der Ziel-Benutzerendstellen und die Inhalte der Kurzmitteilung über das Netzwerk zu einem Short-Message-Service-Zentrum oder einem Short-Message-Service-Gateway-Mobile-Switching-Zentrum des Netzwerks gesendet werden;
die Inhalte der Kurzmitteilung über das Short-Message-Service-Zentrum oder das Short-Message-Service-Gateway-Mobile-Switching-Zentrum nacheinander zu den Ziel-Benutzerendstellen mit den IDs gesendet werden.

6. Verfahren nach Anspruch 1 oder 5, wobei die IDs der Ziel-Benutzerendstellen internationale mobile Teilnehmeridentitäten sind.

7. Verfahren nach Anspruch 1, wobei ferner:
nach dem Senden der Inhalte der Kurzmitteilung zu den Ziel-Benutzerendstellen (303) durch das Netzwerk überwacht wird, ob die Ziel-Benutzerendstellen die Kurzmitteilung erhalten haben,
gemäß dem Ergebnis der Überwachung ein Statusbericht erstellt wird, ob die Ziel-Benutzerendstellen die Kurzmitteilung erhalten haben, und
der Statusbericht zu einer Benutzer-Endstelle zurückgesendet wird, die die Anfrage zur Kurzmitteilungs-Gruppenbeförderung ausgelöst hat.

8. System zur Kurzmitteilungs-Gruppenbeförderung, **dadurch gekennzeichnet, daß** das System aufweist:
einen Gruppenrufregister in einem Netzwerk, wobei das Gruppenrufregister dazu ausgelegt ist, eine Gruppen-ID und IDs von Benutzerendstellen zu speichern, die Mitglieder der Bündelungsgruppe sind, die durch die Gruppen-ID für jede von mehreren Bündelungsgruppen identifiziert ist;
ein Short-Message-Service-Zentrum oder ein Short-Message-Service-Gateway-Mobile-Switching-Zentrum, das dazu ausgelegt ist, eine Anfrage zur Kurzmitteilungs-Gruppenbeförderung zu empfangen, wobei die Anfrage die Gruppen-ID und die Inhalte einer Kurzmitteilung (300) enthält; die Bündelungsgruppe gemäß der Gruppen-ID (301) zu bestimmen; die IDs der Ziel-Benutzerendstellen aus dem Gruppenrufregister (302) zu erhalten und die Inhalte der Kurzmitteilung an die Ziel-Benutzerendstellen (303) zu senden.

9. System nach Anspruch 8, ferner mit:
einer Ursprungs-Benutzerendstelle zum Senden der Anfrage zur Kurzmitteilungs-Gruppenbeförderung an das Netzwerk (300).

10. System nach Anspruch 9, wobei die Ursprungs-Benutzerendstelle ein mobiles Nutzergerät, Internet, E-Mail oder ein Kommunikationssystems-Kontrollzentrum aufweist.

11. Gruppenrufregister, **dadurch gekennzeichnet, daß** das Gruppenrufregister aufweist:
eine Einheit zum Speichern einer Liste von Benutzerendstellen in jedem Gruppenattribut des Gruppenrufregisters, die dafür verantwortlich ist, die IDs der Benutzerendstellen aufzuzeichnen, und
eine Einheit zum Hinzufügen der IDs der Benutzerendstellen zu der Liste der Benutzerendstellen, wenn die Benutzerendstellen Konten eröffnen,
eine Einheit zum Modifizieren der IDs der Benutzerendstellen in der Liste der Benutzerendstellen, wenn die Benutzerendstellen die Eröffnungsinformation modifizieren, und
eine Einheit zum Löschen der IDs der Benutzerendstellen, wenn die Benutzerendstellen aus der Gruppe ausscheiden.

12. Mobileinheit, **dadurch gekennzeichnet, daß** die Mobileinheit aufweist:
eine Einheit zum Speichern einer Gruppe von Benutzerendstellen entsprechend der Identitäten der Gruppe von Benutzerendstellen in einem Gruppenrufregister, zum dem die Gruppe gehört, und
eine Einheit zum Senden einer Anfrage zur Kurzmitteilungs-Gruppenbeförderung, die die Gruppen-ID der Gruppe (300) enthält.

13. Short-Message-Service-Zentrum, **dadurch gekennzeichnet, daß** das Short-Message-Service-Zentrum aufweist:
eine Einheit zum Empfangen einer Anfrage zur Kurzmitteilungs-Gruppenbeförderung, wobei die Anfrage eine Gruppen-ID und die Inhalte einer Kurzmitteilung (300) aufweist,
eine Einheit zum Bestimmen einer Bündelungsgruppe gemäß der Gruppen-ID (301),
eine Einheit zum Erhalten der IDs der Ziel-Benutzerendstellen von einem Gruppenrufregister (302), und
eine Einheit zum Senden der Inhalte der Kurzmitteilung zu den Ziel-Benutzerendstellen mit den IDs (303).

14. Short-Message-Service-Gateway-Mobile-Switching-Zentrum, **dadurch gekennzeichnet, daß** das Short-Message-Service-Gateway-Mobile-Switching-Zentrum aufweist:
eine Einheit zum Empfangen einer Anfrage zur Kurzmitteilungs-Gruppenbeförderung, wobei die Anfrage eine Gruppen-ID und die Inhalte einer Kurzmitteilung (300) aufweist,
eine Einheit zum Bestimmen einer Bündelungsgruppe gemäß der Gruppen-ID (301),
eine Einheit zum Erhalten der IDs der Ziel-Benutzerendstellen von einem Gruppenrufregister (302), und
eine Einheit zum Senden der Inhalte der Kurzmitteilung zu den Ziel-Benutzerendstellen mit den IDs (303).

## Revendications

1. Procédé pour délivrer par groupe des messages courts, **caractérisé par** :
le stockage, dans un registre d'appel de groupe, sur un réseau, d'un ID de groupe et d'ID de terminaux d'utilisateurs qui sont des membres du groupe de partage identifié par cet ID de groupe pour chacun de multiples groupes de partage ;
la réception, par le réseau, d'une demande pour une délivrance par groupe de messages courts, laquelle demande comprend l'ID de groupe et le contenu d'un message court (300) ;
la détermination, par le réseau, du groupe conformément à l'ID de groupe (301), obtenant les ID de terminaux d'utilisateurs de destination à partir du registre d'appel de groupe (302), et
l'envoi, par un centre de service de messages courts ou par un centre de commutation mobile à passerelle pour le service de messages courts, sur le réseau, du contenu du message court aux terminaux d'utilisateurs de destination (303).

2. Procédé selon la revendication 1, dans lequel la demande est envoyée depuis un terminal d'utilisateur de source au réseau (300) ;
le groupe de partage est déterminé conformément à la zone où le terminal d'utilisateur de source est situé et à l'ID de groupe (301).

3. Procédé selon la revendication 1, dans lequel la demande est envoyée depuis un terminal d'utilisateur de source au réseau et comprend une zone (300) d'appel de groupe ;
le groupe est déterminé conformément à la zone d'appel de groupe et à l'ID de groupe (301).

4. Procédé selon la revendication 2 ou la revendication 3, dans lequel le terminal d'utilisateur de source comprend l'un d'un équipement d'utilisateur mobile, de l'Internet, d'un courriel et d'un centre de commande de système de communication.

5. Procédé selon la revendication 1, dans lequel l'envoi du contenu du message court aux terminaux d'utilisateurs de destination (303) comprend :
l'envoi, par le réseau, des ID des terminaux d'utilisateurs de destination et du contenu du message court à un centre de service de messages courts ou à un centre de commutation mobile à passerelle-service de messages courts du réseau ;
l'envoi, par le centre de service de messages courts ou par le centre de commutation mobile à passerelle-service de messages courts, du contenu du message court aux terminaux d'utilisateurs de destination ayant les ID, en relation biunivoque.

6. Procédé selon la revendication 1 ou la revendication 5, dans lequel les ID des terminaux d'utilisateurs de destination sont des identités d'abonnés mobiles internationales.

7. Procédé selon la revendication 1, comprenant en outre :
après l'envoi du contenu du message court aux terminaux d'utilisateurs de destination (303), le fait de contrôler, par le réseau, si les terminaux d'utilisateurs de destination ont reçu le message court,
l'établissement, en fonction du résultat du contrôle, d'un rapport d'état indiquant si les terminaux d'utilisateurs de destination ont reçu le message court, et
le retour du rapport d'état à un terminal d'utilisateur lançant la demande pour une délivrance par groupe de messages courts.

8. Système pour délivrer par groupe des messages courts, **caractérisé en ce que** le système comporte :
un registre d'appel de groupe, sur un réseau, le registre d'appel de groupe étant conçu pour stocker un ID de groupe et des ID de terminaux d'utilisateurs qui sont des membres du groupe de partage identifié par cet ID de groupe pour chacun de multiples groupes de partage ;
un centre de service de messages courts ou un centre de commutation mobile à passerelle-service de messages courts, conçu pour recevoir une demande pour une délivrance par groupe de messages courts, laquelle demande comprend l'ID de groupe et le contenu d'un message court (300) ; pour déterminer le groupe de partage en fonction de l'ID de groupe (301) ; pour acquérir les ID de terminaux d'utilisateurs de destination à partir du registre (302) d'appel par groupe, et pour envoyer le contenu du message court aux terminaux d'utilisateurs de destination (303).

9. Système selon la revendication 8, comportant en outre :
un terminal d'utilisateur de source destiné à envoyer la demande pour une délivrance par groupe de messages courts au réseau (300).

10. Système selon la revendication 9, dans lequel le terminal d'utilisateur de source comprend l'un d'un équipement d'utilisateur mobile, de l'Internet, d'un courriel et d'un centre de commande de système de communication.

11. Registre d'appels par groupe, lequel registre d'appels par groupe est **caractérisé en ce qu'**il comporte :
une unité destinée à sauvegarder une liste de terminaux d'utilisateurs dans chaque attribut de groupe du registre d'appels par groupe, devant enregistrer les ID des terminaux d'utilisateurs ; et
une unité destinée à ajouter les ID des terminaux d'utilisateurs à la liste de terminaux d'utilisateurs lorsque les terminaux d'utilisateurs ouvrent des comptes ;
une unité destinée à modifier les ID des terminaux d'utilisateurs dans la liste de terminaux d'utilisateurs lorsque les terminaux d'utilisateurs modifient l'information d'ouverture ; et
une unité destinée à supprimer les ID des terminaux d'utilisateurs lorsque les terminaux d'utilisateurs quittent le groupe.

12. Unité mobile, laquelle unité mobile est **caractérisée en ce qu'**elle comporte :
une unité destinée à sauvegarder un groupe de terminaux d'utilisateurs en correspondance avec les identités du groupe de terminaux d'utilisateurs sur un registre d'appels par groupe auquel le groupe appartient ; et
une unité destinée à envoyer une demande pour une délivrance par groupe de messages courts comprenant un ID de groupe du groupe (300).

13. Centre de service de messages courts, lequel centre de service de messages courts est **caractérisé en ce qu'**il comporte :
une unité destinée à recevoir une demande pour une délivrance par groupe de messages courts, laquelle demande comprend un ID de groupe et le contenu d'un message court (300),
une unité destinée à déterminer un groupe de partage en fonction de l'ID de groupe (301),
une unité destinée à acquérir les ID de terminaux d'utilisateurs de destination à partir d'un registre d'appels par groupe (302) ; et
une unité destinée à envoyer le contenu du message court aux terminaux d'utilisateurs de destination avec les ID (303).

14. Centre de commutation mobile à passerelle-service de messages courts, lequel centre de commutation mobile à passerelle-service de messages courts est **caractérisé en ce qu'**il comporte :
une unité destinée à recevoir une demande pour une délivrance par groupe de messages courts, laquelle demande comprend un ID de groupe et le contenu d'un message court (300),
une unité destinée à déterminer un groupe de partage en fonction de l'ID de groupe (301),
une unité destinée à acquérir les ID de terminaux d'utilisateurs de destination à partir d'un registre d'appels par groupe (302) ; et
une unité destinée à envoyer le contenu du message court aux terminaux d'utilisateurs de destination avec les ID (303).
